# EUROPEAN PATENT SPECIFICATION

(11) **EP 4 183 464 B1**
(45) Date of publication and mention of the grant of the patent: **28.08.2024**
(21) Application number: 21209293.6
(22) Date of filing: 19.11.2021
(51) Int. Cl.: B01D 29/05, B01D 29/085, B01D 29/52, E02B 3/20, E02B 15/00

(54) **PLASTIC PELLET TRAP DEVICE**
KUNSTSTOFFPELLETAUFFANGVORRICHTUNG
DISPOSITIF DE PIÉGEAGE DE GRANULÉS EN PLASTIQUE

(43) Date of publication of application: 24.05.2023
(73) Proprietor: Universiteit Antwerpen, 2000 Antwerpen (BE)
(72) Inventor: Delahaut, Vyshal, 2660 Hoboken (BE); Van Loon, Gilles, 9120 Melsele (BE)
(74) Representative: IP HILLS NV

(56) References cited:
- EP-A1- 2 954 118
- EP-B1- 2 954 118
- WO-A1-2014/122684
- WO-A1-2014/140664
- CN-U- 211 114 497
- CN-U- 213 952 103

## Description

### Field of the Invention

The present invention generally relates to a plastic pellet trap device.

### Background of the Invention

Plastic pellets are produced by the petrochemical industry, as a main product or as a by-product, and can be considered as a commodity for plastic products. Plastic pellets can come in very different types, shapes and/or sizes. Plastic pellets may include various types of polymers, such as PE, PP, PC or other types and may for example by substantially spherical, substantially cylindrical, substantially disk-shaped or have any other shape. Plastic pellet sizes may for example range from more or less 2 mm to around 5 mm in diameter.

A problem associated with said plastic pellets is that plastic pellets are being lost throughout the value chain, mostly accidentally, for example during transport, in particular during loading of trucks, or when plastic pellets are transferred from an onshore transport system to a ship or when entire containers are lost at sea. Plastic pellets can cause quite some pollution of the environment and may present a serious risk for wildlife, plants and humans. Since awareness of this risk has grown steadily, monitoring programs have been set up to map, quantify and follow up the presence of plastic pellets in nature, for example along rivers and/or beaches, in order to allow the organisation of adequate cleaning programs.

A problem of these plastic pellets monitoring campaigns is that a lot of work is being done by volunteers, often manually, and in a non-standardized way, resulting in a relatively unreliable outcome, which may be difficult to compare, and which may hamper adequate reaction. Another problem is that such manual campaigns are mostly concentrated in easily accessible areas, but for example not on a relatively rocky soil or shore, or along swampy banks, or for example in reed beds.

On the side of the cleaning of plastic pellets, various problems arise: some devices, such as a sort of beach or field vacuum cleaners have been developed, but they have proven to be relatively energy absorbing and cannot pass in areas which are relatively difficult to access. Passive systems, such as floating pontoons, can collect macro-plastics, but are not suitable for the monitoring of plastic pellet pollution or collection of plastic pellets.

Document WO 2014/122684 discloses a conveyor suitable for lifting floating waste or other waste just under the water surface. The conveyor includes a stairway of which the steps are movable along an endless loop having a rising section and a return section. The steps have tread plates provided with projecting means adapted to retain waste and release it when the return section begins.

### Summary of the Invention

It is therefore an aim of the present invention to solve or at least alleviate one or more of the above-mentioned problems. In particular, the invention aims at providing a relatively easy to install plastic pellet trap device allowing a relatively objective or standardized monitoring of plastic pellet pollution or accumulation along banks, for example riverbanks or beaches.

To this aim, according to a first aspect of the invention, there is provided a plastic pellet trap device having the features of claim 1. In particular, the plastic pellet trap device for capturing plastic pellets from water comprises a plurality of filters configured to retain plastic pellets from incoming water, a frame configured to hold said plurality of filters and mounting elements configured to allow mounting of the frame on a tilted surface. In an inventive way, the frame is substantially step - shaped including a plurality of steps. The step - shaped frame can allow and facilitate mounting of the plastic pellet trap device on a slope or tilted surface, such as for example along riverbanks or on a boat landing in a harbour. Since the step-shaped frame is configured to hold the plurality of filters, the device can provide filters at various levels or heights when in use, such that the device can be used in places where a water level is variable, for example due to tidal activity of a river, or due to frequent passage of vessels creating waves, as can be the case in a harbour and in docks. Water can then go over the trap device and pass through said plurality of filters, while plastic pellets can get trapped in one of said plurality of filters, for example in a filter which is under the waterline when a wave passes and above the water line when the wave moves away. In this way, captured plastic pellets can be collected if desired and/or plastic pellet contamination can be studied over a predetermined period of time.

At least one step, preferably every step, of the step-shaped frame is configured to hold one of said plurality of filters. The filter can for example extend over substantially an entire step or only extend partially over a step. In such a way, filters can be provided at various heights to capture plastic pellets from the water when a water level varies during a day.

Alternatively, at least one step, preferably every step, of the step-shaped frame is configured to hold a plurality of filters. Said plurality of filters per step may be all substantially similar filters or may be filters of different types and/or mesh sizes. The filters of said plurality of filters held in one step may be positioned differently, for example some substantially horizontally and some substantially vertically, or may all be positioned in a substantially similar way. The filters of said plurality of filters held in one step may be assembled to a whole or alternatively, they may be separate filters.

One of said plurality of filters held in one step or said plurality of filters held in one forms a basket. Since a basket includes at least a bottom and at least one upstanding side wall, a basket can improve trapping of the plastic pellets since the shape of the basket can improve the capability of retention of the trapped plastic pellets in the filters and avoid that trapped plastic pellets can get washed away again by the water after having been trapped by the ne of the plurality of filters.

Said basket can preferably be a beam-shaped basket. Such a beam-shaped basket can be manufactured relatively easily, since it can include an assembly of a plurality of substantially straight and/or flat filters or sieves. Alternatively, and/or additionally, bent filters of sieves may be used. The basket can for example include a U-shaped filter. The beam-shaped basket can include up to six sides, four of which extend in a longitudinal direction and two of which extend in a transverse direction. All sides of the beam-shaped basket may include filters or only some sides of the beam-shaped basket may include filters while other sides may be closed sides. The filters may extend over at least part of a side or over substantially a full side. Different sides of the beam-shaped basket may include different types of filters. The beam-shaped basket may for example include an open top side. Alternatively, a top side of the beam-shaped basket may be at least partly covered by one of said plurality of filters. Instead of a beam-shaped basket, the basket formed by one or more of the plurality of filters held in one step may have a substantially cylindrical shape or have an inversed and substantially conical shape, truncated or not. Other shapes for the basket are possible as well.

Said plurality of filters can preferably be positioned under the frame when in use. In other words, said plurality of filters is preferably hanging in the frame, which can simplify manufacturing of the device. Alternatively, said plurality of frames can be positioned on the steps of the step-shaped frame instead of hanging in said steps.

Said frame may advantageously be configured to releasably hold said plurality of filters. In this way, said plurality of filters may be taken out relatively easily and the plastic pellets trapped in the filters can be taken out so that the filters can be cleaned. The frame may for example include support rims configured to hold the plurality of filters. The plurality of filters, forming a basket or not, can for example hang or rest on said support rims. The plurality of filters can for example include at least one flange configured to engage said support rim. Alternatively, the plurality of filters can be fixedly attached to the frame of the device.

It is preferred that the plurality of filters includes filters having maximum 2 mm meshes, more preferably maximum 1.8 mm meshes. Such a mesh size can allow sand and water to pass through while plastic pellets between more or less 2 mm and more or less 5 mm can be retained. The meshes may be substantially squared meshes or substantially round meshes or any other shape of meshes. A size of the meshes may be substantially the same over the filter or may vary, either over a filter or between filters. A filter configured to be part of an upstanding side wall of a basket may for example have larges meshes or smaller meshes than a filter configured to form at least part of a bottom of a basket. The plurality of filters can for example include perforated steel plates. Steel plates may include only a few perforations or meshes or holes such that a total surface of the perforations or meshes or holes may for example be smaller than a surface of the steel plate around said perforations. Additionally, and/or alternatively, the plurality of filters can for example include sieves or filters with woven type meshes, in which a total surface of the meshes can be larger than a surface of the material around the meshes.

The mounting elements can advantageously include a plurality of legs. The legs can preferably be hingedly attached to the frame of the trap device. Alternatively, the legs can be rotatably or fixedly attached to the frame of the trap device. The trap device can for example include four legs, of which for example one pair of legs can be attached to a first end of the frame and a second pair of legs can be attached to a second end of the frame opposite the first end of the frame. The trap device can also include more than four legs, for example, five, six, seven, eight or more legs. The legs can be distributed along, and attached to, an outer edge of the frame. The plurality of legs can preferably be mounted to the frame such that a distance between two legs at a base of the legs is larger than a distance between the attachment points of said legs to the frame. In this way, the frame can be mounted on a tilted surface in the water in a relatively stable way, such that the trap device can resist the force of water flowing over and ramming into the trap device.

The plurality of legs can preferably include legs of different lengths. In this way, a frame of the trap device can be mounted under an angle of more or less 45° with respect to a horizontal plane, independently of an angle of the tilted surface on which the trap device can be mounted. An angle of substantially 45° can provide a relatively stable placement of the trap device while the steps, which preferably hold the plurality of filters, can be placed substantially horizontally, which can ensure a relatively good retention of the plastic pellets in the plurality of filters. Alternatively, the plurality of legs can have substantially the same length such that the frame can be mounted substantially in parallel to a slope on which the trap device is mounted.

The plurality of legs may most preferably be adjustable legs, of which a length can be adjusted. A length of said plurality of legs can preferably be adjustable individually, such that the trap device can be mounted on a substantially irregular or rough terrain. The legs can for example be telescopic legs or can be differently adjustable. In this way, the trap device can be installed relatively stably on a relatively large variety of slopes or inclined surfaces, also on uneven slopes, which is often the case on natural riverbanks. At the same time, adjustable legs can for example be made retractable to a storage position, such that the trap device can be transported relatively easily.

The mounting elements can advantageously include a plurality of hinged support feet. The hinged support feet can be hingedly attached to an end of the legs such that the frame can rest on the support feet rather than on said ends of the legs. Said support feet can preferably be larger than a diameter of the legs such that the weight of the frame and the plurality of filters is distributed over a larger surface than when the trap device would rest on the base ends of the legs. This can be especially advantageous for installation of the trap device on a natural underground, in particular on an unpaved, non-rocky, sandy or even swampy surface in the water.

A number of steps of the frame can preferably be adjustable. In this way, a size of the trap device can be adjusted to a length of the slope where the trap device will be positioned or to a difference in water level between tides at the site of use. Together with a number of steps of the frame, also the number of filters can be adjusted accordingly such that a maximum of the frame can be used for filters for trapping plastic pellets. Additionally, and or alternatively, a size of the steps, in particular a height and/or depth or the steps, may be adjustable. In this way, the trap device can be adjusted to an inclination of the slope where the trap device will be positioned.

The frame is made of stainless steel. The plurality of filters, as well as the mounting elements are also made of stainless steel. Stainless steel can provide a relatively solid and long-lasting device, which can resist a relatively harsh environment of continuously moving water, in particular of seawater. Alternatively, in not-claimed embodiments, other material can be used.

### Brief Description of the Drawings

Fig. 1 shows a schematic side view of a preferred embodiment of a plastic pellet trap device according to the invention mounted on a slope;
Fig. 2 shows a perspective view on a preferred embodiment of a plastic pellet trap device according to the invention;
Fig. 3 shows a schematic side view of the plastic pellet trap device of Figure 2;
Fig. 4 shows a perspective view on a plurality of filters of the plastic pellet trap device of Figure 2.

### Detailed Description of Embodiment(s)

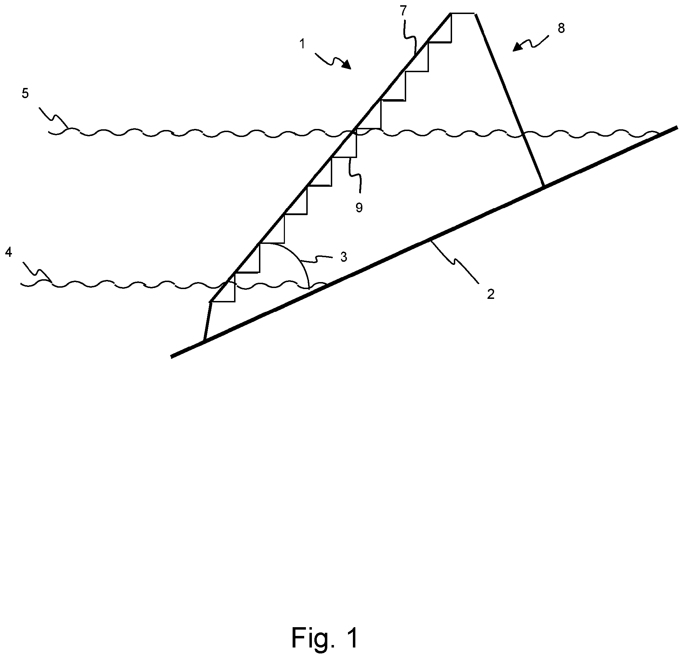

Figure 1 shows a schematic side view of a preferred embodiment of a plastic pellet trap device 1 according to the invention mounted on a slope. The device 1 can for example be mounted in a harbour, preferably on an artificial slope 2 in a dock, such as a ship slipway. Water in harbour docks can suffer from relatively high plastic pellet contamination or pollution caused by inadvertent or accidental losses of plastic pellets during handling of goods between ships and quays. The passage of ships in the docks can cause waves in the water such that plastic pellets in the water may be pushed towards corners or slopes outside the main channel or boat passageways, in relatively sedate water, such as for example on ship slipways. Additionally, and/or alternatively, the natural current or flow of rivers may take along plastic pellets causing plastic pellet deposits on riverbanks, for example on rocky riversides or in reed beds. Natural riverbanks can also include slopes on which the plastic pellet trap device can be mounted. The plastic pellet trap device is preferably mounted such that an inclination or angle 3 of the plastic pellet trap device with respect to a substantially horizontal plane, such as the water level, is more or less 45°. The plastic pellet trap device is preferably positioned in water showing a difference in water level over time, for example due to tidal effects causing a higher water level and a lower water level twice a day. Harbours are commonly protected from tidal effects, but a water level in docks may for example vary due to water displacement caused by relatively large passing ships. In both cases, the plastic pellet trap device 1 is preferably mounted such that at least part of the trap device, in particular part of the plurality of filters included in the device 1, can be from time to time above the lower water level 4 but under the higher water level 5 at other times. In other words, it is preferred that the plastic pellet trap device 1 is not constantly submerged in water, nor that the plastic pellet trap device 1 is constantly above the water level. Rather, the plastic pellet trap device 1 is configured to be mounted where water can temporarily flow over the device and withdraw again.

The plastic pellet trap device 1 comprises a plurality of filters 6 configured to retain plastic pellets from incoming water, a frame 7 configured to hold said plurality of filters 6 and mounting elements 8 configured to allow mounting of the frame 7 on a tilted surface 2. The frame 7 is substantially step - shaped including a plurality of steps 9. Step - shaped is meant to be understood as having a shape like a staircase. The steps 9 are preferably placed substantially in parallel to a horizontal plane, such as for example the water level 4 or 5, which can improve a retention efficiency of the plastic pellets in the trap device 1. A first step is shifted in height and depth with respect to a second step to form a staircase. The frame 7 can additionally include side panels and/or side bars 11 configured to be mounted along the inclined sides of the frame 7, which can improve the stability of the frame 7. The frame 7 is made of stainless steel or, in embodiments not forming part of the present invention, of any other suitable material which can resist potentially polluted water, in particular relatively salty seawater.

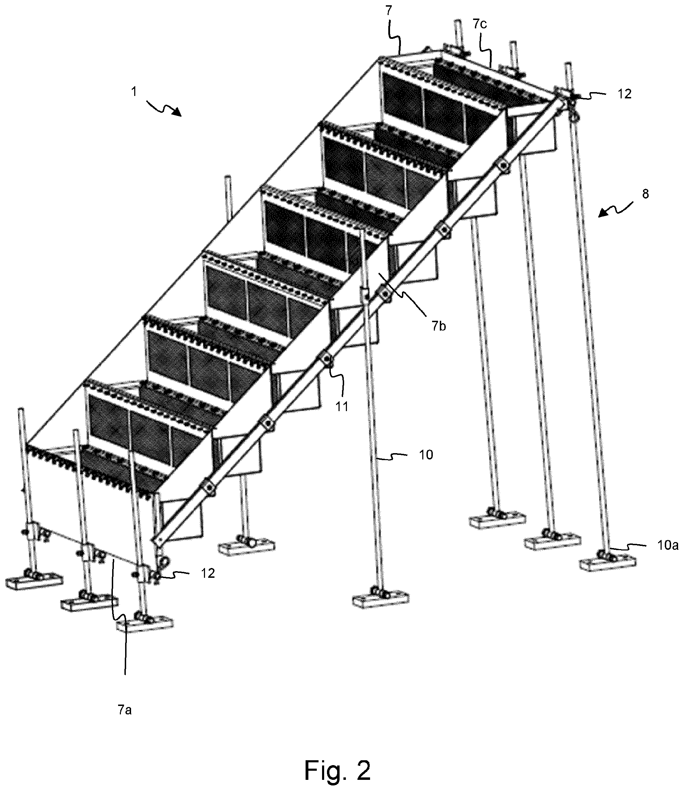

Figure 2 shows a perspective view on a preferred embodiment of a plastic pellet trap device 1 according to the invention. The mounting elements 8 can include a plurality of legs 10, such as four legs, six legs, eight legs or more. The legs 10 can be attached to the frame 7, for example to a lower side 7a of the frame 7, to a lateral side 7b of the frame 7 and/or to an upper side 7c of the frame 7. The fixation of the legs 10 to the frame 7 can be done with mounting elements known to the person skilled in the art, such as for example with clamps, brackets, rings or any other suitable mounting element. The plurality of legs 10 can preferably include legs of different lengths. Legs mounted to the upper side 7c of the frame 7 can for example be longer than legs mounted to the lower side 7a. The legs 10 can each have a fixed length while a distance between a supporting end 10a of the leg and an attachment element 12 of the leg to the frame 7 may be adjustable, preferably individually adjustable. In such a case, an upper end of the leg 10 opposite the supporting end 10a of the leg may extend through the attachment element 12 and above the frame 7. Alternatively, the legs 10 can have an adjustable length, as is for example the case with telescopic legs. In both cases, a length of the legs between the respective attachment element 12 to the frame and the supporting end 10a of the leg is adjustable. The attachment elements 12 may be any known attachment or fixation element configured to attach a leg to a frame, such as for example a clamping element and/or bolts, screws or any other suitable attachment element. The mounting elements 8 can further include a plurality of hinged support feet which can each be hingedly connected to a leg 10, in particular to a supporting end 10a of a leg 10. Said hinged support feet can for example include a resting plate configured to spread the weight of the trap device over a larger surface area than just a cross-section of the leg 10. The support feet, in particular a resting plate, can include holes, with or without a screw thread, through which fixation elements can extend such that the support feet can be attached to the ground. Alternatively, said hinged support feet can include a tripod or any other suitable support feet.

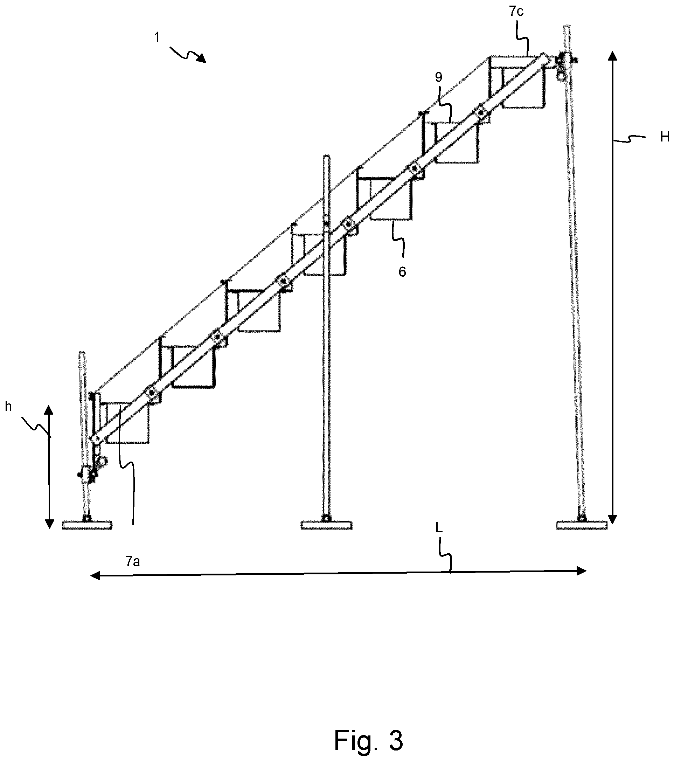

Fig. 3 shows a schematic side view of the plastic pellet trap device of Figure 2. The frame 7 of the plastic pellet trap device 1 as shown includes seven steps 9. Another number of steps 9 is possible as well, depending on the differences in water level which can be expected on a given site. The higher the expected difference in water level, the more steps can be included in the frame 7 of the device 1. In an advantageous embodiment, a number of steps of the frame 7 can be adjustable, for example in a modular version in which additional steps can be added. Alternatively, the frame could be adjustable to allow a higher number of filters to be used. The steps 9 of the frame 7 are preferably even steps with equal dimensions, but alternatively, steps can have varying dimensions over the frame, depending on the shape and/or inclination of the shoreline, riverbank or boat landing. A height or depth of the steps can even be adjustable per step. As an example, a step height can be comprised between more or less 0.1 m and 0.4 m and a step depth can be comprised between more or less 0.1 m and 0.3 m. Steps can also be higher, deeper, or smaller depending again on the shape and/or an inclination of the location where the trap device 1 is mounted for use. The frame can for example be configured to releasably hold said plurality of filters 6. The filters 6 can for example be clicked or clamped onto the frame 7 or just hang in the frame 7, so that the filters 6 can be removed and cleaned relatively easily. Alternatively, the plurality of filters 6 may be fixedly attached to the frame 7. In the preferred embodiment of the trap device 1 as shown, the plurality of filters 6 is positioned under the frame 7 when in use. In particular, a basket is hanging on each step 9, such that the basket including the filters 6 are positioned under the step 9. In this way, plastic pellets can not only be captured but also be retained more easily to allow collection of the plastic pellets when the water has retracted from the trap device 1. A total length L of the trap device 1 between the lower side 7a of the frame 7 and the upper side 7c of the frame 7 along a substantially horizontal plane can for example be comprised between 1 m and 3m, for example be around 1.5m. A total width of the trap device 1 can be comprised between more or less 0.5m and 2m, for example be around more or less 1m. A maximal height H of the frame 7 at the upper side 7c can for example be around 2 m, more preferably around 1.5 m. A maximal height h at the lower side 7a of the frame 7 can for example be around more or less 0.5 m. Smaller, or larger, trap devices are possible as well.

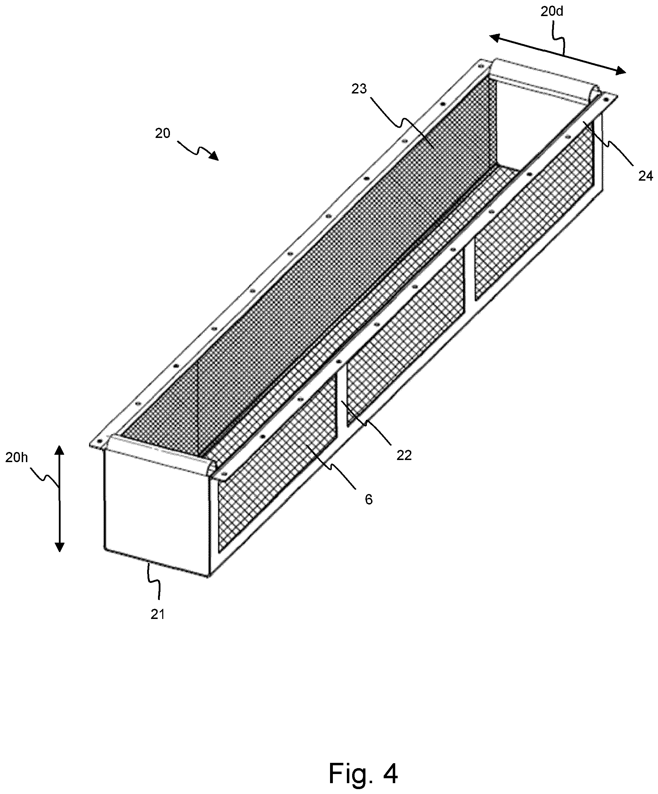

Fig. 4 shows a perspective view on a plurality of filters of the plastic pellet trap device of Figure 2. One of said plurality of filters 6 held in one step 9 or said plurality of filters 6 held in one step 9 forms a basket 20. Alternatively, a substantially flat filter can be mounted on a step 9 of the frame 7. Said basket 20 can for example be a beam-shaped basket as shown. Other shapes of baskets are possible as well. The basket 20 includes a bottom 21 and one or more side walls 22. The bottom 21 and/or the side walls 22 can include filters 6, for example flat or bended filters, sieves, flat or bended perforated steel plates including maximum 2 mm meshes or holes, more preferably maximum 1.8 mm meshes, for example woven type meshes or any other suitable mesh type. Filters including smaller or larger mesh sizes may be used if another type and/or size of plastic is to be captured. The basket 20 can for example include a U-shaped filter such that a number of sharp corners can be limited, which can facilitate cleaning of the filters. A top side 23 of the basket 20 may be open to let water flow in and out of the basket, while plastic pellets larger than a mesh size of the plurality of filters 6 can be captured by the filters 6 and retained in the basket 20. Water can flow freely through the filters 6. An upper edge of the one or more side walls 22 includes an outwardly extending flange 24 configured to rest on the frame 7, in particular on a step 9 of the frame 7. The flange 24 may be configured to be fixedly or releasably mounted to the frame 7, for example by bolts and nuts extending through the flange 24 or in any other suitable manner. The side wall 22 on the shorter side of the beam-shaped basket 20 can be a closed plate or could also include one or more filters 6. A height 20h of the basket 20 can for example be included in a range of more or less 5 cm to more or less 30 cm, for example between 10 cm to more or less 15 cm. A depth of the basket 20d, in particular, a length of a shorter side wall 22 of the beam-shaped basket can preferably, but need not, correspond to a depth of a step 9 of the frame 7 and can for example have more or less a same dimension as the height of the basket 20, for example more or less 13 cm. Alternatively, a height 20h of the basket 20 and a depth 20d of the basket 20 may be different from a height or a depth of a step 9. In particular, a height of the basket 20 may be larger or smaller than a height of a step 9. A depth 20d of the basket 20 may be smaller than a depth of a step 9.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof as defined by the claims. The present embodiments are therefore to be considered in all respects as illustrative and not restrictive, the scope of the invention being indicated by the appended claims only, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in the claims. It will furthermore be understood by the reader of this patent application that the words "comprising" or "comprise" do not exclude other elements or steps, that the words "a" or "an" do not exclude a plurality, and that a single element, may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Plastic pellet trap device (1) for capturing plastic pellets from water, wherein the device comprises
- a plurality of filters (6) configured to retain plastic pellets from incoming water passing through said plurality of filters;
- a frame (7) configured to hold said plurality of filters;
- mounting elements (8) configured to allow mounting of the frame on a tilted surface (2);
wherein the frame is substantially step - shaped including a plurality of steps (9), wherein at least one step, preferably every step, of the step-shaped frame is configured to hold one of said plurality of filters or a plurality of filters, wherein one of said plurality of filters held in one step or said plurality of filters held in one step forms a basket (20) having one or more side walls and a bottom, wherein the frame (7), the plurality of filters (6) and the mounting elements (8) are made of stainless steel, wherein an upper edge of one or more of the side walls (22) of the basket (20) includes an outwardly extending flange (24) configured to rest on the substantially step-shaped frame (7).

2. Plastic pellet trap (1) according to claim 1, wherein said basket (20) is a beam-shaped basket.

3. Plastic pellet trap (1) according to any of the preceding claims, wherein said plurality of filters (6) is positioned under the frame when in use.

4. Plastic pellet trap (1) according to any of the preceding claims, wherein said frame (7) is configured to releasably hold said plurality of filters.

5. Plastic pellet trap (1) according to any of the preceding claims, wherein said plurality of filters (6) includes filters having maximum 2 mm meshes.

6. Plastic pellet trap (1) according to any of the preceding claims, wherein the mounting elements (8) include a plurality of legs (10).

7. Plastic pellet trap (1) according to claim 6, wherein the plurality of legs (10) includes legs of different lengths.

8. Plastic pellet trap (1) according to claim 6 or 7, wherein the plurality of legs (10) are adjustable legs.

9. Plastic pellet trap (1) according to any of the preceding claims, wherein the mounting elements (8) include a plurality of hinged support feet.

## Patentansprüche

1. Kunststoffpelletauffangvorrichtung (1) zum Einfangen von Kunststoffpellets aus Wasser, wobei die Vorrichtung umfasst
- eine Vielzahl von Filtern (6), die dazu konfiguriert sind, Kunststoffpellets aus einströmendem Wasser zurückzuhalten, das durch die Vielzahl von Filtern strömt;
- einen Rahmen (7), der dazu konfiguriert ist, die Vielzahl von Filtern festzuhalten;
- Montageelemente (8), die dazu konfiguriert sind, eine Montage des Rahmens auf einer geneigten Oberfläche (2) zu ermöglichen;
wobei der Rahmen im Wesentlichen stufenförmig ist und eine Vielzahl von Stufen (9) beinhaltet, wobei mindestens eine Stufe, vorzugsweise jede Stufe, des stufenförmigen Rahmens dazu konfiguriert ist, einen der Vielzahl von Filtern oder eine Vielzahl von Filtern festzuhalten, wobei einer der Vielzahl von Filtern, die in einer Stufe festgehalten werden, oder die Vielzahl von Filtern, die in einer Stufe festgehalten werden, einen Korb (20) mit einer oder mehreren Seitenwänden und einem
Boden bildet, wobei der Rahmen (7), die Vielzahl von Filtern (6) und die Montageelemente (8) aus rostfreiem Stahl hergestellt sind, wobei eine obere Kante einer oder mehrerer der Seitenwände (22) des Korbs (20) einen sich nach außen erstreckenden Flansch (24) beinhaltet, der dazu konfiguriert ist, auf dem im Wesentlichen stufenförmigen Rahmen (7) aufzuliegen.

2. Kunststoffpelletauffänger (1) nach Anspruch 1, wobei der Korb (20) ein balkenförmiger Korb ist.

3. Kunststoffpelletauffänger (1) nach einem der vorhergehenden Ansprüche, wobei die Vielzahl von Filtern (6) bei Gebrauch unter dem Rahmen positioniert ist.

4. Kunststoffpelletauffänger (1) nach einem der vorhergehenden Ansprüche, wobei der Rahmen (7) dazu konfiguriert ist, die Vielzahl von Filtern lösbar festzuhalten.

5. Kunststoffpelletauffänger (1) nach einem der vorhergehenden Ansprüche, wobei die Vielzahl von Filtern (6) Filter mit maximal 2 mm Maschenweite beinhaltet.

6. Kunststoffpelletauffänger (1) nach einem der vorhergehenden Ansprüche, wobei die Montageelemente (8) eine Vielzahl von Beinen (10) beinhalten.

7. Kunststoffpelletauffänger (1) nach Anspruch 6, wobei die Vielzahl von Beinen (10) Beine unterschiedlicher Länge beinhaltet.

8. Kunststoffpelletauffänger (1) nach Anspruch 6 oder 7, wobei die Vielzahl von Beinen (10) verstellbare Beine sind.

9. Kunststoffpelletauffänger (1) nach einem der vorhergehenden Ansprüche, wobei die Montageelemente (8) eine Vielzahl von klappbaren Stützfüßen beinhalten.

## Revendications

1. Dispositif de piégeage de granulés de plastique (1) destiné à capturer des granulés de plastique présents dans l'eau, ledit dispositif comprenant
- une pluralité de filtres (6) conçus pour retenir des granulés de plastique provenant de l'eau entrante passant à travers ladite pluralité de filtres ;
- un cadre (7) conçu pour maintenir ladite pluralité de filtres ;
- des éléments de montage (8) conçus pour permettre le montage du cadre sur une surface inclinée (2) ;
ledit cadre étant sensiblement en forme de marche comprenant une pluralité de marches (9), au moins une marche, de préférence chaque marche, du cadre en forme de marche étant conçue pour maintenir l'un de ladite pluralité de filtres ou d'une pluralité de filtres, l'un de ladite pluralité de filtres maintenus dans une seule marche ou ladite pluralité de filtres maintenus dans une seule marche formant un panier (20) comportant une ou plusieurs parois latérales et un
fond, ledit cadre (7), ladite pluralité de filtres (6) et lesdits éléments de montage (8) étant constitués d'acier inoxydable, un bord supérieur de l'une ou de plusieurs des parois latérales (22) du panier (20) comprenant une bride s'étendant vers l'extérieur (24) conçue pour reposer sur le cadre sensiblement en forme de marche (7).

2. Piège à granulés de plastique (1) selon la revendication 1, ledit panier (20) étant un panier en forme de poutre.

3. Piège à granulés de plastique (1) selon l'une quelconque des revendications précédentes, ladite pluralité de filtres (6) étant positionnée sous le cadre lors de l'utilisation.

4. Piège à granulés de plastique (1) selon l'une quelconque des revendications précédentes, ledit cadre (7) étant conçu pour maintenir de manière amovible ladite pluralité de filtres.

5. Piège à granulés de plastique (1) selon l'une quelconque des revendications précédentes, ladite pluralité de filtres (6) comprenant des filtres comportant des mailles maximales de 2 mm.

6. Piège à granulés de plastique (1) selon l'une quelconque des revendications précédentes, lesdits éléments de montage (8) comprenant une pluralité de pieds (10).

7. Piège à granulés de plastique (1) selon la revendication 6, ladite pluralité de pieds (10) comprenant des pieds de différentes longueurs.

8. Piège à granulés de plastique (1) selon la revendication 6 ou 7, ladite pluralité de pieds (10) étant des pieds réglables.

9. Piège à granulés de plastique (1) selon l'une quelconque des revendications précédentes, lesdits éléments de montage (8) comprenant une pluralité de pieds de support articulés.
